# EUROPEAN PATENT APPLICATION

(11) **EP 0 910 941 A1**
(43) Date of publication of application: **28.04.1999**
(21) Application number: 98650065.0
(22) Date of filing: 29.09.1998
(51) Int. Cl.: A01F 15/07, A01F 15/08

(54) **Improvements in and relating to bale wrapping machines**

(30) Priority: 29.09.1997 IE 970705
(71) Applicant: Agri Patents Limited, Limerick (IE)
(72) Inventor: O'Connor, Enda, County Clare (IE)
(74) Representative: O'Connor, Donal Henry

(57) **Abstract**

A bale unloader (1) for a bale wrapping machine, has a bale receiving chute (10) on a support framework (4) which is first lowered to a horizontal position by a hydraulic lowering ram (11) with a ground engaging base plate (6) providing a steady platform. Then an auxilliary tipping ram (14) is operated to raise the chute and allow a bale to slide gentle onto the ground. If it is a round bale it will rest on a flat end face.

## Description

### Introduction

The present invention relates to bale wrapping machines.

The invention is particularly directed to a bale unloader for a bale wrapping machine having a baling table of the type comprising a support framework, a bale receiving chute mounted on the support framework and lowering means for moving the support framework about a substantially horizontal framework axis from a bale reception position adjacent the baling table to a ground engaging position and having auxiliary tipping means for causing the bale receiving chute to pivot relative to the support framework about a chute axis transverse to the framework axis to deposit a wrapped bale on its end. While the invention is directed towards use with bale wrapping machines generally, it will have particular application to bale wrapping machines that are used for the so-called round bale, which strictly speaking is not a spherical bale, but is in fact a cylindrically shaped bale, having two flat end faces.

Typical bale wrapping machines are for example, disclosed in PCT Patent Specification No. WO 92 20210 (Cox) or in European Patent Specification No. 0 405 727A (Roynberg).

In general such bale wrapping machines comprise a chassis supported on ground engaging wheels with a feed mechanism mounted thereon for rolling sheet plastics material around the bale on a baling table which is operable in a lower substantially horizontal wrapping position and then is pivotal about a horizontal tipping axis to a raised position for tipping the wrapped bale from the baling table onto the ground or a bale unloader. Such bale unloaders are usually an arcuate plate which again tips about a horizontal axis with respect to the rear of the baling table to receive the bale when the baling table is in the raised tipping position and to then tip about the horizontal axis to allow the bale to roll gently off the bale unloader onto the ground.

Unfortunately with such bale unloaders there are problems. Firstly the bales tend to roll off and are scattered widely around a field and since more and more the bales, whether they be round, square or rectangular bales of forage are now being wrapped in one particular portion of a field and the person doing the bale wrapping requires the wrapped bales to stack neatly and not to roll all over the place or to be scattered all over the place. Ideally round bales should be stored on their ends in neat rows and columns.

The present invention is directed towards providing such a bale wrapping machine and in particular to a bale unloader for a bale wrapping machine of the general type hereinbefore described having a baling table.

### Statements of Invention

According to the invention there is provided a bale unloader for a bale wrapping machine having a baling table of the type comprising a support framework, a bale receiving chute mounted on the support framework and lowering means for moving the support framework about a substantially horizontal framework axis from a bale reception position adjacent the baling table to a ground engaging position and having auxiliary tipping means for causing the bale receiving chute to pivot relative to the support framework about a chute axis transverse to the framework axis to deposit a wrapped bale on its end, characterised in that the lowering means and auxiliary tipping means are operable in sequence whereby the support framework is first lowered to a stationary position on the ground with the chute substantially horizontal when the auxiliary tipping means is operated to pivot and deposit a wrapped bale on its end.

The advantage of firstly lowering the bale to the ground and then tipping the bale to the vertical is that this provides a steady platform from the which the bale is placed on the ground. This is particularly advantageous with round bales.

In one embodiment of the invention the lowering means and the auxiliary tipping means are linked by control means incorporating sensing means whereby when the lowering means ceases operation the auxiliary tipping means is operated. By doing this it ensures that there is a smooth transition from the horizontal tipping to the vertical tipping and the operator does not have to operate the controls twice.

Ideally the lowering means and the auxiliary tipping means are fluid actuated rams and preferably are hydraulic rams. Since hydraulic fluid is the operating fluid used on most of these vehicles because they usually have some form of power take-off unit, it is preferable that all the controls be operated in the same way.

Where there are hydraulic rams fitted there is provided a valve which interconnects the two hydraulic rams with a hydraulic pump and includes pressure and flow sensing means whereby on the flow of oil from the hydraulic lowering ram ceasing, oil is delivered to the auxiliary hydraulic tipping ram. This is a very useful way of providing the control.

Ideally the support framework includes ground engaging feet. The advantage of this is again to provide a steady support on the ground for the chute so that the bale is lowered to a stationary horizontal position before it is tipped.

Finally the bale receiving chute comprises a flat floor plate and two diverging upstanding side walls. The advantage of this is that particularly for round bales the contact area between the bale and the chute is relatively slight, thus when the bale is tipped it will slide easily onto the ground and will not stick in the chute. The problem is if it tends to stick in the chute when the friction is overcome on further tipping it tends to bounce or rush out of the chute often falling over.

### Detailed Description of the Invention

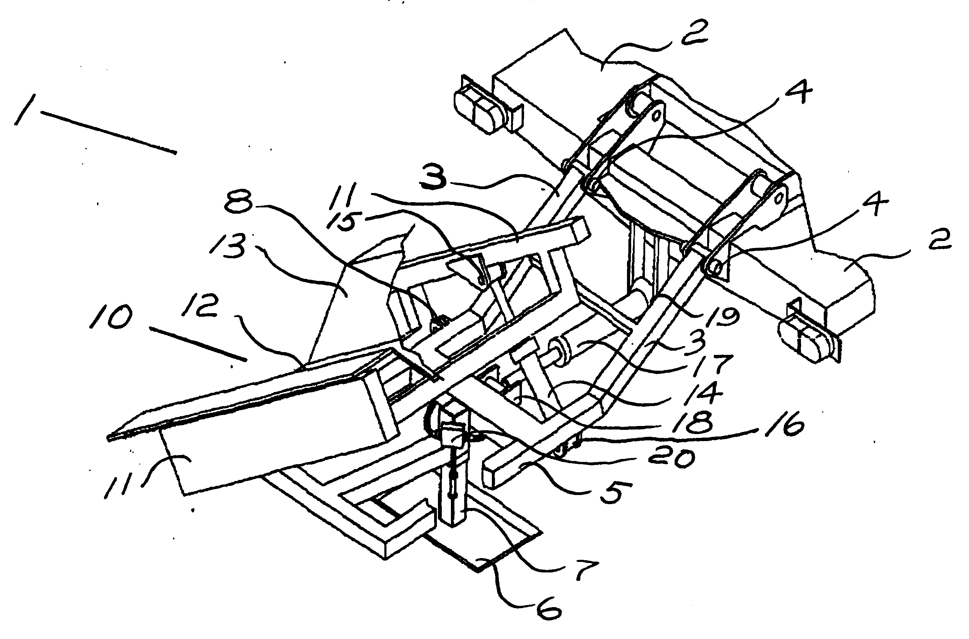

The invention will be more clearly understood from the following description of an embodiment thereof given by way of example only with reference to the accompanying drawing which is a perspective view of a bale unloader according to the invention in the stacking position.

Referring to the drawing, there is illustrated a bale unloader indcated generally by the reference numeral 1 mounted on a chassis 2 which supports the remainder of a bale wrapping machine including a baling table, all of which is not illustrated. The bale unloader 1 comprises a support framework formed from a pair of arms 3 mounted by pivot hinges 4 on the remainder of the baling machine. The support framework 4 includes a transverse H frame 5 carrying a ground engaging foot formed by a base plate 6 on a depending post 7. The H frame 5 has pivotally mounted thereon at 8 a chute indicated generally by the reference numeral 10. The chute 10 comprises a framework 11 carrying a floor plate 12 and a pair of splayed side walls 13.

Auxiliary tipping means is provided by an auxiliary hydraulic tipping ram 14 which is mounted between the framework 11 at a pivot 15 and the H frame 5 at a pivot 16. A further lowering means formed by a hydraulic lowering ram 17 is mounted between the H frame 5 at a pivot 18 and the chassis 2 at a pivot 19. A valve 20 interconnects the rams 14 and 17 and a hydraulic pump (not shown) to control operation of the bale unloader.

In operation, the bale wrapping takes place in the conventional way and prior to tipping the baling table to unload the wrapped bale the bale unloader 1 is tipped upwardly by the lowering ram 17 with the chute 10 in a substantially horizontal position i.e. with the tipping ram 14 retracted The bale unloader 1 is then lowered back downwardly to the horizontal position until the base plate 6 engages the ground, then the tipping ram 14 is operated to pivot the chute 10 upwardly to cause the bale contained therein to slide down and to be supported on the ground on one of its ends. The chute 10 is tipped sufficiently to ensure this. Generally it doesn't have to be tipped into the totally vertical position, though in some instances it may be.

It is envisaged that instead of hydraulic rams pneumatic rams or indeed any other actuators could be used.

Further it is envisaged that both the lowering means and the auxiliary tipping means can be advantageously linked together by suitable control means, which control means would incorporate sensing means, whereby when the lowering ram ceases operation the auxiliary tipping means may be operated. Obviously when hydraulic rams are used, there will be a hydraulic pump and ideally pressure and flow sensing means will be used whereby the flow of oil from the hydraulic lowering ram can be sensed and when it has ceased oil can then be delivered to the auxiliary hydraulic tipping ram to operate it.

The ground engaging foot according to the present invention is particularly advantageous because many of the constructions of bale unloaders are generally speaking unstable and the whole purpose of the present invention is to ensure that there is a steady platform carrying a chute from which the bale can be easily and controllably tipped. For this reason the construction of the chute is important since, for example, for round bales the bale will only contact the base of the chute at one portion and again the side walls will only contact at one small area and thus there will not be a great friction exerted between the sides of the bale and the chute and therefore tipping should allow the bale to slide smoothly out of the chute into an upright position.

It will be appreciated that the bale unloader may now be very easily used to carry bales from place to place, since by tipping the chute upwardly a bale can be easily pushed onto the chute and then when the chute is tipped into the horizontal position, it will lie within the chute for further transport. This can be particularly advantageous in certain circumstances as it avoids the need for further bale handling equipment.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the claims.

## Claims

1. A bale unloader for a bale wrapping machine having a baling table of the type comprising a support framework, a bale receiving chute mounted on the support framework and lowering means for moving the support framework about a substantially horizontal framework axis from a bale reception position adjacent the baling table to a ground engaging position and having auxiliary tipping means for causing the bale receiving chute to pivot relative to the support framework about a chute axis transverse to the framework axis to deposit a wrapped bale on its end, characterised in that the lowering mans (17) and auxiliary tipping (14) means are operable in sequence whereby the support framework (4) is first lowered to a stationary position on the ground with the chute (10) substantially horizontal when the auxiliary tipping means (14) is operated to pivot and deposit a wrapped bale on its end.

2. A bale unloader as claimed in claim 1 in which the lowering means (17) and the auxiliary tipping mans (14) are linked by control means incorporating sensing means whereby when the lowering means ceases operation the auxiliary tipping means is operated.

3. A bale unloader as claimed in claim 1 or 2 in which the lowering means (17) and the auxiliary tipping means (14) are fluid actuated rams.

4. A bale unloader as claimed in claim 3 in which the fluid actuated rams are hydraulic rams, namely a hydraulic lowering ram (17) and an auxiliary hydraulic tipping ram (14).

5. A bale unloader as claimed in claim 5 in which a valve (2) interconnects the two hydraulic rams (14, 17) with a hydraulic pump and includes pressure and flow sensing means whereby on the flow of oil from the hydraulic lowering ram ceasing, oil is delivered to the auxiliary hydraulic tipping ram (14).

6. A bale unloader as claimed in any preceding claim in which the support framework includes a ground engaging foot (6, 7).

7. A bale unloader as claimed in any preceding claim in which the bale receiving chute comprises a flat floor plate (12) and two diverging upstanding side walls (13).
